# EUROPÄISCHE PATENTSCHRIFT

(11) **EP 0 617 657 B1**
(45) Veröffentlichungstag und Bekanntmachung des Hinweises auf die Patenterteilung: **19.02.1997**
(21) Anmeldenummer: 93922909.2
(22) Anmeldetag: 04.10.1993
(51) Int. Cl.: B29C 67/00

(54) **VERFAHREN ZUM HERSTELLEN VON DREIDIMENSIONALEN OBJEKTEN**
PROCESS FOR PRODUCING THREE-DIMENSIONAL OBJECTS
PROCEDE POUR FABRIQUER DES OBJETS TRIDIMENSIONNELS

(30) Priorität: 07.10.1992 DE 4233812
(43) Veröffentlichungstag der Anmeldung: 05.10.1994
(73) Patentinhaber: EOS GmbH ELECTRO OPTICAL SYSTEMS, 82152 Planegg (DE)
(72) Erfinder: LANGER, Hans, J., D-82166 Gräfelfing (DE); REICHLE, Johannes, D-81377 München (DE)
(74) Vertreter: Prüfer, Lutz H., Dipl.-Phys.
(86) Internationale Anmeldenummer: EP9302709
(87) Internationale Veröffentlichungsnummer: WO9407681

(56) Entgegenhaltungen:
- EP-A- 0 171 069
- EP-A- 0 416 124
- EP-A- 0 429 196
- EP-A- 0 484 183
- WO-A-89/10801
- WO-A-92/20505
- US-A- 5 204 592

## Beschreibung

Die vorliegende Erfindung betrifft ein Verfahren zum Herstellen eines dreidimensionalen Objekts.

Ein Beispiel für ein derartiges Verfahren ist in dem Artikel von H. Kodama, "Automatic method for fabricating a three-dimensional plastic model with photo-hardening polymer", Rev.Sci.Instrum. 52(11), Nov. 1981, Seiten 1770 bis 1773, beschrieben. Bei einem derartigen Verfahren tritt das Problem auf, daß eine Maßhaltigkeit des Objekts nicht gewährleistet ist. Der Grund hierfür liegt insbesondere darin, daß die einzelnen Schichten während der Herstellung beim Verfestigen eine Schrumpfung erfahren und damit Spannungen und Formänderungen des gesamten geschichteten Aufbaus bewirken.

Aus der EP-A-0 362 982 ist ein Verfahren zum Herstellen eines dreidimensionalen Objektes, bei dem das Objekt durch aufeinanderfolgendes Verfestigen einzelner Schichten in einem Bad aus verfestigbarem Material durch Einwirkung einer elektromagnetischen Strahlung erzeugt wird, bekannt.

Um das oben genannte Problem zu lösen, wird in der EP-A-0 362 982 vorgeschlagen, entweder zunächst nur einzelne Streifen zu verfestigen, die mit benachbarten und darunterliegenden Streifen nur über eine Stützkonstruktion verbunden sind, oder die Schicht nur bereichsweise zu verfestigen, wobei im Objekt Spalten zwischen den Bereichen entstehen.

Die erstgenannte Lösung hat jedoch den Nachteil, daß die Verfestigung sehr schwer zu steuern ist, da ein Anheften eines Streifens an den darunterliegenden Streifen vermieden werden muß. Beiden Lösungen ist der Nachteil gemeinsam, daß die Festigkeit des Objekt vor einer eventuellen Nachverfestigung sehr gering ist und damit ein Verformen oder Zerbrechen des Objekts durch Einwirken äußerer Kräfte auftreten kann.

Aus den Druckschriften WO 89/10801, WO 92/20505 und EP-A-0 429 196 ist jeweils ein Verfahren zum Herstellen eines dreidimensionalen Objektes bekannt, bei dem das Objekt durch aufeinanderfolgendes Verfestigen einzelner Schichten in einem Bad aus verfestigbarem Material durch Einwirkung einer elektromagnetischen Strahlung erzeugt wird. Es ist daraus ferner bekannt, daß in einer Schicht Teilbereiche verfestigt werden können.

Des weiteren ist aus der Druckschrift US-A-5 104 592 ein Verfahren zum Herstellen eines dreidimensionalen Objektes zu entnehmen, bei dem Verspannungen und Verwindungen am Objekt durch die Anwendung von verschiedenen Bestrahlungstechniken wie z.B. gestrichelte Linien, gebogene Linien, Sekundärstrukturen, Vernieten oder Mehrfachbestrahlen vermindert werden.

Es ist daher Aufgabe der Erfindung, die Genauigkeit bei der Herstellung des Objekts zu verbessern und dabei die obengenannten Nachteile des Standes der Technik zu vermeiden.

Diese Aufgabe wird erfindungsgemäß durch das in Anspruch 1 gekennzeichnete Verfahren

Die Erfindung wird im weiteren anhand eines Ausführungsbeispiels unter Bezug auf die Figuren erläutert. Von den Figuren zeigen:
- Fig. 1: eine Draufsicht auf eine erfindungsgemäß verfestigte Schicht eines Objekts;
- Fig. 2: einen Schnitt durch das Objekt entlang der Linie II-II in Figur 1; und
- Fig. 3: eine schematische Darstellung einer Ausführungsform der erfindungsgemäßen Vorrichtung.

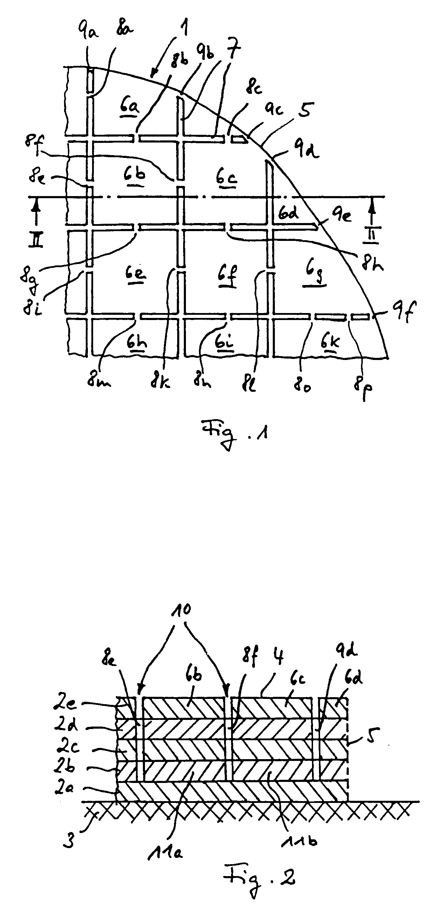

In Figur 1 ist eine Draufsicht auf ein in Figur 2 im Schnitt dargestelltes Teil eines Objekts 1 gezeigt, das in Form einzelner übereinanderliegender Schichten 2a,2b,2c,2d und 2e beispielsweise durch aufeinanderfolgendes Verfestigen dieser Schichten auf einer Unterlage 3 in einem Bad aus flüssigem, durch Einwirken elektromagnetischer Strahlung polymerisierbarem Kunststoff hergestellt wird. Ein derartiges Verfahren ist bekannt, sodaß auf eine detaillierte Beschreibung hier verzichtet werden kann.

Die an die Unterlage 3 angrenzende erste Schicht 2a wird dabei in bekannter Weise durch vollständige Verfestigung der Schicht innerhalb der Kontur oder Begrenzungsfläche 5 des Objekts hergestellt.

Die Darstellung nach Figur 1 zeigt die Draufsicht auf die Oberseite 4 der obersten Schicht 2e, die nach außen durch die Kontur 5 des Objekts 1 begrenzt ist. Die Herstellung der weiteren Schichten 2b...2e folgt dabei den jeweils gleichen Regeln, sodaß die Herstellung dieser Schichten des Objekts im folgenden unter Bezug auf die in Figur 1 gezeigts Draufsicht auf die Schicht 2e beschrieben werden kann.

Zunächst wird eine auf der ersten Schicht 2a gebildete flüssige Schicht nicht an allen Bereichen innerhalb der Kontur 5, sondern nur an voneinander an allen Seiten beabstandeten Teilbereichen 6a...6k verfestigt. Diese Teilbereiche sind in Figur 1 als im wesentlichen quadratische Bereiche gezeigt, können jedoch auch jede andere Form aufweisen. Die Größe der Teilbereiche ist beliebig, jedoch wird vorzugsweise eine lineare Erstreckung von 1-20mm, insbesondere 2-10mm gewählt.

Zwischen den Teilbereichen 6a...6k verbleiben damit zunächst flüssige spaltförmige Zwischenbereiche, die in der Figur pauschal mit dem Bezugszeichen 7 versehen sind. Die Breite dieser Zwischenbereiche, also der Abstand der Teilbereiche 6a...6k voneinander, beträgt etwa 1/20 bis 1/500, vorzugsweise etwa 1/50 bis 1/200 und besonders bevorzugt etwa 1/100 der Erstreckung der Teilbereiche, also etwa 0.05 bis 0.2mm, vorzugsweise etwa 0.1mm.

Bei und nach der Verfestigung erfahren die Teilbereiche eine Schrumpfung, die die Breite der Zwischenbereiche 7 vergrößert. Die Schrumpfung erfolgt dabei in den ersten Sekunden nach der Bestrahlung besonders schnell und ist beispielsweise nach 10 Sekunden bereits zu 80% abgeschlossen. Das bedeutet bei üblicher Herstellungsgeschwindigkeit, daß die Schrumpfung der zuerst verfestigten Teilbereiche der Schicht 2b bei Verfestigung der letzten Teilbereiche bereits weitgehend abgeschlossen ist.

Nach Verfestigen der Teilbereiche werden jeweils benachbarte Teilbereiche 6a,6b; 6b,6c; 6b,6e; etc. verbindende Verbindungsbereiche in Form dünner Verbindungsstege 8a...8p verfestigt. Die Breite dieser Verbindungsstege beträgt größenordnungsmäßig etwa 1/50 bis 1/200 und vorzugsweise etwa 1/100 der Erstreckung der Teilbereiche, also etwa 0.05 bis 0.2mm, vorzugsweise etwa 0.1mm. Es können ein oder mehrere Verbindungsstege zwischen jeweils zwei benachbarten Teilbereichen gebildet werden. An den Stellen, an denen die Zwischenbereiche 7 auf die Kontur 5 treffen, werden Begrenzungsbereiche 9a...9f gebildet, die entweder anstelle der Verbindungsbereiche der an die Kontur angrenzenden Teilbereiche 6a,6c,6g,6k treten oder zusätzlich zu diesen gebildet werden können.

Die Verfestigung der Verbindungsstege 8a...8p und der Begrenzungsbereiche 9a...9f erfolgt vorzugsweise nach Schrumpfung der Teilbereiche 6a...6k, da dann die auf die Verbindungsstege einwirkenden Kräfte und damit die Spannungen und Dehnungen der Stege geringer sind. Dabei beginnt die Bildung der Verbindungsstege vorzugsweise zwischen denjenigen Teilbereichen einer Schicht, die zuerst verfestigt wurden und deren Schrumpfung daher schon am weitesten fortgeschritten ist. Alternativ können die Stege jedoch auch gleichzeitig mit den jeweils angrenzenden Teilbereichen verfestigt werden. Die Funktion der Verbindungsstege besteht in jedem Fall darin, die Teilbereiche 6a...6k miteinander zu koppeln und damit das geometrische Gefüge und die mechanische Stabilität zu erhalten.

Nachdem die zweite Schicht 2b in dieser Weise teilweise verfestigt wurde, werden die darüberliegenden Schichten 2c...2e in der gleichen Weise gebildet. Insbesondere erfolgt die Verfestigung der Teilbereiche 6 derart, daß einzelne Teilbereiche 6a...6k jeweils genau über den entsprechenden Teilbereichen 6a...6k der vorhergehenden Schicht 2b verfestigt werden und somit durch die übereinanderliegenden Zwischenbereiche 7 senkrechte Spalte 10 gebildet werden, die nach außen zur Kontur 5 hin durch die übereinanderliegenden Begrenzungsbereiche 9 abgeschlossen sind. Jeder Teilbereich wird gleichzeitig mit der Verfestigung mit dem darunterliegenden Teilbereich verbunden, sodaß einzelne Zellen 11a,11b etc. in Form von senkrechten prismatischen Elementen entstehen, die untereinander durch die senkrechte Rippen bildenden übereinanderliegenden Verbindungsbereiche 8 verbunden sind.

Die (nicht gezeigte) oberste Schicht des Objekts 1 wird in der gleichen Weise wie die erste Schicht 2a, also als durchgehend verfestigte Schicht, gebildet. Damit bildet diese oberste Schicht zusammen mit der ersten Schicht 2a und den Begrenzungsbereichen 9 eine geschlossene feste Einhüllung bzw. Oberfläche des Objekts 1, sodaß das in den Spalten 10 noch flüssig vorliegende Material beim Herausnehmen des Objekts aus dem Bad nicht herausfließen kann. Dieses flüssige Material wird anschließend durch eine Nachhärtung durch Belichtung oder Wärmeeinwirkung ausgehärtet.

Aufgrund der Verfestigung jeder Teilfläche 6 getrennt von benachbarten Teilflächen ist die Schrumpfung jeweils lokal begrenzt. Spannungen und Dehnungen sind aufgrund der zeitlich verschobenen Verfestigung der Verbindungsbereiche 8 gering und werden hauptsächlich von diesen Verbindungsbereichen aufgenommen, wodurch eine Verformung des gesamten Objekts erheblich verringert wird. Aufgrund der geringen Breite der durch die schmalen Zwischenbereiche 7 gebildeten Spalte 10 bewirkt auch die Schrumpfung bei der nachträglichen Verfestigung des Materials in diesern Spalten nur noch eine unwesentliche Formänderung. Schließlich ist die zur Verfestigung der einzelnen Teilflächen 6 verwendete spezifische Lichtleistung ein freier Parameter und kann somit so gewählt werden, daß bereits in kurzer Zeit hohe Schrumpfwerte der Teilflächen 6 erreicht werden und damit die Gesamtverformung des Objekts 1 möglichst gering wird.

Die Größe der Teilflächen 6 ist je nach Anwendungsfall frei wählbar; beispielsweise ist eine Verringerung bis hin zur Voxelgröße (Rasterbelichtung) denkbar. Ferner ist anstelle der prismatischen Form der Zellen 11 auch eine beliebige dreidimensionale Form denkbar, wobei dann die Spalte 10 nicht exakt vertikal, sondern mit seitlicher Versetzung verlaufen können. Ferner kann die Anzahl der Verbindungsstege nach den Eigenschaften des Materials und den mechanischen Anforderungen an das Objekt gewählt werden. Beispielsweise erfordern höhere mechanische Anforderungen und eine stärkere Schrumpfung des Materials bei der Verfestigung eine größere Zahl von Stegen.

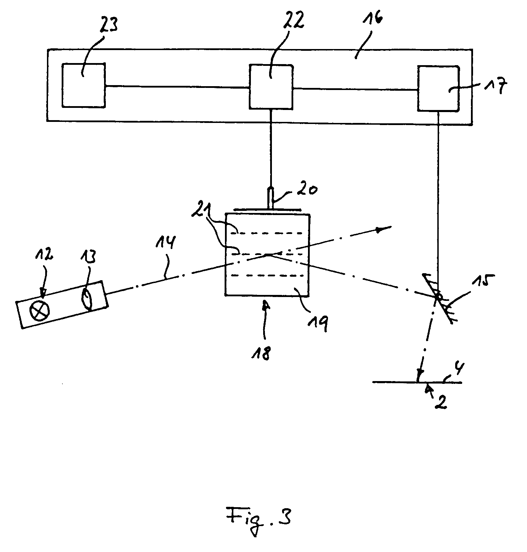

Eine zur Ausführung dieses Verfahrens geeignete Vorrichtung soll im weiteren unter Bezug auf Figur 3 beschrieben werden.

Eine Lichtquelle 12, beispielsweise ein Laser, erzeugt über eine Optik 13 einen gebündelten Lichtstrahl 14, der über eine Ablenkvorrichtung 15, beispielsweise einen um zwei Achsen drehbar gelagerten Spiegel, an beliebige Stellen der Oberfläche der Schicht 2 gelenkt wird. Die Ablenkung des Spiegels 15 wird dabei von einer in einer Steuerung 16 vorgesehenen Spiegelsteuerung 17 entsprechend den Geometriedaten des Objekts 1 gesteuert.

Zwischen der Lichtquelle 12 und der Ablenkvorrichtung ist in der Bahn des Lichtstrahls 14 ein akusto-optischer Modulator 18 angeordnet, der im wesentlichen aus einem Kristall 19 und einem daran angeordneten Transducer 20 zum Erzeugen von periodischen Dichteänderungen 21 im Kristall 19 besteht. Der Transducer 20 ist mit einer Transducersteuerung 22 verbunden, die eine Synchronisiervorrichtung und ein Ein/Aus- und Leistungsstellglied für den Transducer 20 aufweist und mit einer Bittabelle 23, die in der Steuerung 16 als look-up Tabelle gespeichert ist, sowie mit der Spiegelsteuerung gekoppelt ist.

Im Betrieb liest die Transducersteuerung 22 aus der Bittabelle 23 die Stellen aus, an denen die Verfestigung der Teilbereiche 6 bzw. an denen entsprechend den Zwischenbereichen 7 keine Verfestigung erfolgen soll. Mittels der Synchronisiervorrichtung erregt die Transducersteuerung 22 den Transducer 20 synchron mit der Bewegung der Ablenkvorrichtung 15 genau zu dem Zeitpunkt, an dem der Lichtstrahl 14 von der Ablenkvorrichtung 15 auf eine einem Teilbereich 6 entsprechende Stelle der Schicht 2 auftreffen soll. Durch diese Erregung entstehen im Kristall 19 die Dichteänderungen 21 und der Lichtstrahl 14, der unter einem flachen Winkel auf die Flächen der Dichteänderungen auftrifft, wird reflektiert, sodaß er als reflektierter Strahl 14' auf die Ablenkvorrichtung 15 auftrifft und von dort auf die entsprechende Stelle der Schicht 2 auftrifft, wodurch eine Polymerisation an dieser Stelle erfolgt.

Erhält die Transducersteuerung 22 aus der Bittabelle 23 die Information, daß an der dem Auftreffpunkt des Lichtstrahls auf der Schicht 2 ein Zwischenbereich 7 gebildet werden soll, dann schaltet sie die Erregung des Transducers 20 synchron mit der Bewegung des Ablenkvorrichtung 15 genau zu dem Zeitpunkt ab, an dem der reflektierte Lichtstrahl an der dem Zwischenbereich 7 entsprechenden Stelle auftreffen würde. Dadurch erfolgt im Kristall 19 keine Reflexion des Lichtstrahls 14, sodaß der Lichtstrahl 14'' nicht auf der Ablenkvorrichtung 15 und somit nicht auf der Schicht 2 auftrifft.

Mittels des Leistungsstellglieds kann die Transducersteuerung 22 die Stärke der Dichteänderungen im Kristall 19 und damit den Anteil des daran reflektierten Lichtstrahls 14' einstellen. Damit ist es zusätzlich zu Ein/Aus-Schaltung des reflektierten Lichtstrahls 14' möglich, dessen Leistung und somit die Geschwindigkeit und Stärke der Polymerisierung am entsprechenden Ort der Schicht 2 zu steuern.

Anstelle des akusto-optischen Modulators kann auch jeder andere zur schnellen Durchschaltung eines Licht- bzw. Laserstrahls geeigneter Modulator, beispielsweise ein elektro-optischer Modulator oder andere, verwendet werden.

## Patentansprüche

1. Verfahren zum Herstellen eines dreidimensionalen Objekts, bei dem das Objekt (1) durch aufeinanderfolgendes Verfestigen einzelner Schichten (2a,2b,2c,2d,2e) in einem Bad aus verfestigbarem Material durch Einwirkung einer elektromagnetischen Strahlung erzeugt wird, wobei
jeweils zunächst Teilbereiche (6a-6k) einer Schicht verfestigt und dabei mit darunterliegenden Teilbereichen der vorher verfestigten Schicht zu mehrschichtigen Zellen (11a,11b) verbunden werden, danach die Teilbereiche mit den benachbarten Teilbereichen derselben Schicht durch Verfestigung von schmalen Verbindungsbereichen zwischen den Teilbereichen (6a-6k) in Form von Verbindungsstegen (8a-8p) verbunden werden und schließlich die Zwischenbereiche (7) zwischen den Teilbereichen (6a-6k) verfestigt werden.

2. Verfahren nach Anspruch 1,
dadurch gekennzeichnet, daß die Verbindungsbereiche (8a-8p) erst dann nach einer Wartezeit verfestigt werden, die einer Schrumpfung der Teilbereiche um mindestens ein vorgegebenes Maß entspricht.

3. Verfahren nach Anspruch 2,
dadurch gekennzeichnet, daß die Wartezeit zwischen 5 und 100 Sekunden, vorzugsweise etwa 10 Sekunden beträgt.

4. Verfahren nach einem der Ansprüche 1 bis 3,
dadurch gekennzeichnet, daß die Verbindungsbereiche (8a-8p) zwischen benachbarten Zellen in jeder Schicht nach der Verfestigung der Teilbereiche (6a-6k) gebildet werden.

5. Verfahren nach einem der Ansprüche 1 bis 3,
dadurch gekennzeichnet, daß die Verbindungsstege (8a-8p) zwischen den Zellen (11a,11b) in einer Zahl von Schichten (2a-2e), die geringer ist als die Zahl der Schichten der Zellen (11a,11b), gebildet werden.

6. Verfahren nach Anspruch 4 oder 5,
dadurch gekennzeichnet, daß zwischen benachbarten Teilbereichen (6a-6k) ein oder mehrere Verbindungsbereiche (8a-8p) gebildet werden.

7. Verfahren nach einem der vorhergehenden Ansprüche,
dadurch gekennzeichnet, daß zum Einschließen der Zwischenbereiche die Teilbereiche (6a-6k) durch Begrenzungsbereiche (9a-9f) an der Außenkontur (5) des Objekts (1) verbunden werden.

8. Verfahren nach einem der vorhergehenden Ansprüche,
dadurch gekennzeichnet, daß die Verfestigung der Zwischenbereiche (7) erst nach der Verfestigung der Teilbereiche (6a-6k) aller Schichten des Objekts erfolgt.

9. Verfahren nach einem der vorhergehenden Ansprüche,
dadurch gekennzeichnet, daß der Abstand benachbarter Teilbereiche (6a-6k) in der Größenordnung von 1/20 bis 1/200, vorzugsweise 1/100 der Ausdehnung der Teilbereiche (6a-6k) liegt.

10. Verfahren nach Anspruch 7,
dadurch gekennzeichnet, daß die unterste und die oberste Schicht jeweils als vollständige Fläche verfestigt werden, sodaß diese zusammen mit den Begrenzungsbereichen (9a-9f) an der Außenkontur (5) des Objekts (1) eine vollständig geschlossene Oberfläche bilden.

## Claims

1. Process for producing a three-dimensional object, in which the object (1) is generated by means of successive hardening of individual layers (2a, 2b, 2c, 2d, 2e) in a bath of hardenable material by means of the action of an electromagnetic radiation, in each case firstly subregions (6a-6k) of a layer being hardened and, in so doing, being connected to subregions lying beneath them of the previously hardened layer to form multilayer cells (11a, 11b), then the subregions are connected to the adjacent subregions of the same layer by means of hardening narrow connecting regions between the subregions (6a-6k), in the form of connecting webs (8a-8p), and finally the intermediate regions (7) between the subregions (6a-6k) are hardened.

2. Process according to Claim 1, characterized in that the connecting regions (8a-8p) are hardened only after a waiting time which corresponds to a shrinkage of the subregions by at least a predetermined amount.

3. Process according to Claim 2, characterized in that the waiting time is between 5 and 100 seconds, preferably about 10 seconds.

4. Process according to one of Claims 1 to 3, characterized in that the connecting regions (8a-8p) between adjacent cells in each layer are formed following the hardening of the subregions (6a-6k).

5. Process according to one of Claims 1 to 3, characterized in that the connecting webs (8a-8p) between the cells (11a, 11b) are formed in a number of layers (2a-2e) which is smaller than the number of layers of cells (11a, 11b).

6. Process according to Claim 4 or 5, characterized in that one or more connecting regions (8a-8p) are formed between adjacent subregions (6a-6k).

7. Process according to one of the preceding claims, characterized in that, in order to enclose the intermediate regions, the subregions (6a-6k) are connected at the outer contour (5) of the object (1) by means of delimiting regions (9a-9f).

8. Process according to one of the preceding claims, characterized in that the hardening of the intermediate regions (7) is carried out only after the hardening of the subregions (6a-6k) of all the layers of the object.

9. Process according to one of the preceding claims, characterized in that the distance between adjacent subregions (6a-6k) is of the order of magnitude of 1/20 to 1/200, preferably 1/100, of the extent of the sub-regions (6a-6k).

10. Process according to Claim 7, characterized in that the lowest and the uppermost layer are in each case hardened as complete areas, so that these, together with the delimiting regions (9a-9f), form a completely closed surface on the outer contour (5) of the object (1).

## Revendications

1. Procédé pour fabriquer un objet tridimensionnel dans lequel l'objet (1) est créé au moyen du durcissement successif de couches individuelles (2a, 2b, 2c, 2d, 2e) dans un bain de matières capable de durcir par l'action d'un rayonnement électromagnétique, des zones partielles (6a- 6k) d'une couche étant tout d'abord respectivement durcies et en même temps reliées aux zones partielles de la couche précédemment durcie pour former des cellules à plusieurs couches (11a - 11b), les zones partielles étant ensuite reliées aux zones partielles adjacentes de la même couche par durcissement de minces zones de liaison entre les zones partielles (6a - 6k) en forme de ponts de liaison (8a - 8p) et les zones intermédiaires (7) entre les zones partielles (6a - 6k) étant enfin durcies.

2. Procédé selon la revendication 1, caractérisé en ce que les zones de liaison (8a - 8p) ne sont durcies qu'après un temps d'attente qui correspond à une contraction d'au moins une valeur donnée des zones partielles.

3. Procédé selon la revendication 2, caractérisé en ce que le temps d'attente est compris entre 5 et 100 secondes, de préférence environ 10 secondes.

4. Procédé selon l'une quelconque des revendications 1 à 3, caractérisé en ce que les zones de liaison (8a - 8p) entre des cellules adjacentes sont formées dans chaque couche après le durcissement des zones partielles (6a - 6k).

5. Procédé selon l'une quelconque des revendications 1 à 3, caractérisé en ce que les ponts de liaison (8a - 8p) entre les cellules (11a - 11b) sont formés d'un nombre de couches qui est inférieur au nombre de couches des cellules (11a - 11b).

6. Procédé selon la revendication 4 ou 5, caractérisé en ce qu'entre les zones partielles adjacentes (6a - 6k), une ou plusieurs zones de liaison (8a - 8p) sont formées.

7. Procédé selon l'une quelconque des revendications précédentes, caractérisé en ce que pour inclure les zones intermédiaires, les zones partielles (6a - 6k) sont reliées au contour extérieur (5) de l'objet (1) par des zones de délimitation (9a - 9f).

8. Procédé selon l'une quelconque des revendications précédentes, caractérisé en ce que le durcissement des zones intermédiaires (7) n'est effectué qu'après le durcissement des zones partielles (6a - 6k) de toutes les couches de l'objet.

9. Procédé selon l'une quelconque des revendications précédentes, caractérisé en ce que la distance entre des zones partielles adjacentes (6a - 6k) est de l'ordre de 1/20 à 1/200, de préférence 1/100 de la dilatation des zones partielles (6a - 6k).

10. Procédé selon la revendication 7, caractérisé en ce que la couche inférieure et la couche supérieure sont respectivement durcies comme surface complète de façon que celles-ci forment ensemble avec les zones de délimitation (9a - 9f) sur le contour extérieur (5) de l'objet (1) une surface complètement fermée.
